# EUROPÄISCHE PATENTSCHRIFT

(11) **EP 2 937 565 B1**
(45) Veröffentlichungstag und Bekanntmachung des Hinweises auf die Patenterteilung: **21.09.2016**
(21) Anmeldenummer: 14165997.9
(22) Anmeldetag: 25.04.2014
(51) Int. Cl.: F03G 7/06, F16K 31/02

(54) **Aktuatorvorrichtung**
Actuator device
Dispositif d'actionneur

(43) Veröffentlichungstag der Anmeldung: 28.10.2015
(73) Patentinhaber: Magna Car Top Systems GmbH, 74321 Bietigheim-Bissingen (DE)
(72) Erfinder: Grintsch, Andreas, 71229 Leonberg (DE)
(74) Vertreter: Rausch, Gabriele

(56) Entgegenhaltungen:
- EP-A1- 1 279 784
- DE-A1- 10 233 601
- DE-A1-102008 054 900

## Beschreibung

### Gebiet der Erfindung

Die vorliegende Erfindung betrifft eine Aktuatorvorrichtung umfassend ein erstes Formgedächtnislegierungs-Element und ein zweites Formgedächtnis-legierungs-Element sowie zumindest ein Stellelement und ein erstes Federelement.

### Stand der Technik

Solche Aktuatorvorrichtungen finden bevorzugt im Automotive Bereich Anwendung und dienen beispielsweise als Verriegelungsmechanismus für Kraftfahrzeugtüren oder bewegliche Dächer. Die Aktuatorvorrichtung kann aber auch beispielsweise im Non-Automotiv Bereich, z.B. bei Ventilen, zur Aktuierung von Ventilkörpern eingesetzt werden.

Eine Aktuatorvorrichtung ist aus der DE 10 2008 054 900 A1 bekannt. Bei dieser Vorrichtung sind ein Aktuator und ein Federelement zwischen einem Stellglied und einem Endstück angeordnet, wobei das Stellglied von einem Aktuator und einem Federelement verschiebbar ist.

Aus der EP 1 279 784 A1 ist ein Verschluss bekannt, bei dem ein Verschlusshebel durch einen Formgedächtnislegierungs-Draht in eine geöffnete Position gebracht werden kann.

### Zusammenfassung der Erfindung

Es ist eine Aufgabe der Erfindung, Aktuatorvorrichtungen in der Hinsicht zu verbessern, dass eine zuverlässige Bewegung eines Stellelements ermöglicht wird.

Die Lösung der Aufgabe erfolgt durch eine Aktuatorvorrichtung umfassend ein erstes Formgedächtnislegierungs-Element und ein zweites Formgedächtnislegierungs-Element sowie ein erstes Stellelement und ein erstes Federelement, wobei das erste Stellelement mit dem ersten Formgedächtnislegierungs-Element und dem zweiten Formgedächtnislegierungs-Element derart wirkverbunden ist, dass wenn das erste Formgedächtnislegierungs-Element erwärmt wird, das erste Stellelement in eine erste Richtung bewegt wird und wenn das zweite Formgedächtnislegierungs-Element erwärmt wird, das erste Stellelement in eine der ersten Richtung entgegengesetzte zweite Richtung bewegt wird, wobei das erste Formgedächtnislegierungs-Element und/oder das zweite Formgedächtnislegierungs-Element mit dem ersten Federelement verbunden ist, wobei das erste Federelement als Längenausgleich für das erste Formgedächtnislegierungs-Element und/oder das zweite Formgedächtnislegierungs-Element eingerichtet ist.

Erfindungsgemäß sind das erste Formgedächtnislegierungs-Element (FGL-Element) und das zweite FGL-Element mit zumindest einem Stellelement wirkverbunden, wobei die Anordnung der Bauteile zueinander in unterschiedlichen Varianten erfolgen kann wie in der Figurenbeschreibung detailliert beschrieben.

Das erste Federelement ist so angeordnet, dass es als Längenausgleich für den Stellweg für zumindest ein, bevorzugt beide FGL-Elemente dient. Der Längenausgleich erfolgt bei einer Längenänderung der FGL-Elemente, entweder durch Erwärmung eines FGL-Elements oder aufgrund einer Verschiebung bzw. Verdrehung des ersten Stellelements. Das Federelement verhindert zuverlässig ein ungewolltes Durchhängen oder Überdehnen der FGL-Elemente, wodurch Beschädigungen an betroffenen Bauteilen verhindert werden. Zur Betätigung des Stellelements wird ein FGL-Element erwärmt, das Erwärmen kann beispielsweise durch Bestromen des FGL-Elements erfolgen.

Das Federelement kann beispielsweise aus einer oder mehreren Federn, beispielsweise Druck- oder Zugfedern, aufgebaut sein. Es kann aber auch alternativ eine Druckkammer sein, in welcher durch Komprimieren und Dekomprimieren eines geeigneten Gases, beispielsweise mittels eines Kolbens, eine gewünschte Federkraft erreicht wird. Das Federelement kann auch eine Kombination der zuvor genannten Federn und der Druckkammer sein.

Weiterbildungen der Erfindung sind in den abhängigen Ansprüchen, der Beschreibung sowie den beigefügten Zeichnungen angegeben.

Gemäß einer erfindungsgemäßen Ausführungsform ist das erste Federelement frei beweglich zwischen dem ersten FGL-Element und dem zweiten FGL-Element angeordnet. Das Federelement ist hierbei mit einem ersten Ende des FGL-Elements und einem ersten Ende des zweiten FGL-Elements verbunden.

Unter frei beweglich ist hierbei zu verstehen, dass beide Enden des ersten Federelements mit jeweils einem Ende eines ersten und zweiten FGL-Elements oder mit einem ersten Ende und einem zweiten Ende eines FGL-Elements verbunden ist, wodurch das Federelement in einem eingeschränkten Raum frei beweglich ist.

Diese Ausführungsform ist besonders günstig und einfach realisierbar, da ein bzw. zwei Federelemente als Längenausgleich für den erforderlichen Stellweg der beiden FGL-Elemente verwendet werden können. Bei dieser Ausführungsform sind keine zusätzlichen Befestigungen, Halterungen oder sonstige Vorrichtungen, welche die Kräfte des Federelements aufnehmen müssten, erforderlich.

Zwischen den Federelementen und den FGL-Elementen sind in einer bevorzugten Ausführungsform Verbindungselemente vorgesehen, welche beispielsweise die Kontakte zur Bestromung der FGL-Drähte aufweisen. Diese Verbindungselemente sind dabei so ausgebildet, dass sie sich bei einer Aktuierung der FGL-Drähte mit diesen mitverschieben können.

In einer weiteren speziellen erfindungsgemäßen Ausführungsform ist ein Federelement über ein Gehäuse mit dem Stellelement verbunden. Das Federelement ist hierbei im Gehäuse untergebracht und mit einem Ende eines FGL-Elements verbunden.

Das Stellelement wird erfindungsgemäß durch Erwärmen des ersten FGL-Elements in eine Endstellung bewegt, in welcher das Stellelement beispielsweise auch nach dem Erwärmen des ersten FGL-Elements verbleiben kann, insbesondere durch einrasten. Um das Stellelement in die Ausgangsstellung zurück bewegen zu können, muss das zweite FGL-Element erwärmt werden. Das zweite FGL-Element ist dabei so mit dem Stellelement wirkverbunden, dass es eine zum ersten FGL-Element entgegengerichtete Bewegung des Stellelements bewirkt.

Gemäß einer bevorzugten Ausgestaltung der Erfindung ist das FGL-Element ein Draht. Das hat den Vorteil, dass das FGL-Element wenig Gewicht aufweist und mit geringem Energieaufwand erwärmbar ist. Durch das Erwärmen verkürzt sich das erwärmte FGL-Element und das Stellelement wird in eine erste Endstellung bewegt. Dabei wird das erste Federelement, welches mit zumindest einem FGL-Element verbunden ist, gedehnt. Das FGL-Element wird bevorzugt in einem Umgebungstemperaturbereich zwischen -40°C und 90°C eingesetzt. Die Umwandlungstemperaturen des FGL-Elements liegen bevorzugt oberhalb der Umgebungstemperatur. Es wird für das FGL-Element eine Legierung gewählt, welche für den Anwendungszweck, den durchzuführenden Stellweg, der Zyklenanzahl und den dabei auftretenden Kräften am besten geeignet ist.

Nach dem Bestromen kühlt sich das FGL-Element ab, wodurch sich das FGL-Element wieder längt. Das FGL-Element erreicht hierbei jedoch nicht ganz seine Ursprungslänge wieder. Das Federelement ist dabei so mit dem FGL-Element verbunden, dass ein Durchhängen des FGL-Elements aufgrund der Längung verhindert wird, indem es durch Spannen die überschüssige Länge ausgleicht.

Gemäß einer Ausführungsform der Erfindung sind das erste FGL-Element und/oder das zweite FGL-Element über zumindest eine Umlenkrolle umlenkbar. Das Umlenken soll in erster Linie einen kompakten Aufbau bei begrenztem Bauraum bewirken, um einen, für das Stellelement erforderlichen, großen Stellweg zu erreichen. Die Länge des FGL-Elements und der somit erforderliche Stellweg, ergibt sich aus dem Weg den das Stellelement machen muss, um von einer Endstellung in die andere Endstellung gebracht zu werden.

Bevorzugt ist die Umlenkrolle aus einem Werkstoff hergestellt, welcher den gleichen Wärmekoeffizienten wie das Umgebungsmedium aufweist. Dadurch wird erreicht, dass die Umlenkrolle keinen negativen Einfluss beim Erwärmen und Abkühlen auf das FGL-Element hat. Das Umgebungsmedium ist bevorzugt Luft, kann aber auch ein beliebiges anderes geeignetes Gas sein.

Das Stellelement ist durch das Erwärmen des FGL-Elements translatorisch und/oder rotatorisch bewegbar. Das Stellelement wird dabei so lange bewegt, bis es die Endstellung, beispielsweise durch Eingreifen in ein Gegeneingriffselement, erreicht.

An den ersten Enden und/oder zweiten Enden der FGL-Elemente ist bevorzugt jeweils ein mechanischer Anschlag vorgesehen, welcher die Bewegung der FGL-Elemente begrenzt. Bei Bestromung beispielsweise des ersten FGL-Elements wird das Federelement durch die Längenänderung des ersten FGL-Elements gegen den mechanischen Anschlag des ersten und des zweiten FGL-Elements gedrückt. Das Stellelement wird aufgrund der Längenänderung verschoben und/oder verdreht. In weiterer Folge wird Das zweite FGL-Element durch das erste FGL-Element gelängt und das Stellelement durch eine Verschiebung und/oder Verdrehung in seine Endlage bewegt. Das erste FGL-Elements wird beim Abkühlen wieder länger. Das Federelement gleicht diese Längenänderung aus. Dabei zieht sich das gedehnte Federelement aufgrund der eigenen Federkraft zusammen, wobei sich das Federelement vom mechanischen Anschlag löst. Wird nun das zweite FGL-Element bestromt, wird das Stellelement in seine Ausgangsposition zurück bewegt. Das erste FGL-Element wird dadurch vom zweiten FGL-Element über das Federelement und den mechanischen Anschlag gelängt und erhält dadurch wieder vollständig seine Ursprungslänge. Da die Rückstellung des Stellelements nur über das zweite FGL-Element erfolgen kann, verwirklicht die Aktuatorvorrichtung das Agonist-Antagonist Prinzip.

Die FGL-Elemente sind in einer bevorzugten Ausführungsform kraft- und/oder formschlüssig mit den Umlenkrollen verbunden.

In einer weiteren erfindungsgemäßen Ausführungsform ist das erste Federelement mit dem ersten Ende und dem zweiten Ende des ersten FGL-Elements verbunden und bevorzugt auch ein zweites Federelement mit dem ersten Ende und dem zweiten Ende des zweiten FGL-Elements verbunden.

Diese Ausführungsform hat den Vorteil dass jedes FGL-Element für zumindest ein Stellelement vorgesehen werden kann, vor allem wenn die Stellelemente voneinander beabstandet angeordnet sind und nicht mit einer gemeinsamen Aktuierung betätigbar sind.

Um ein rasche Abkühlen des FGL-Elements zu ermöglichen, kann auch ein Kühlelement angeordnet werden, welches ein rasches Abkühlen des FGL-Elements ermöglicht. Dies kann beispielsweise ein Werkstoff sein der eine gute Wärmeleitfähigkeit aufweist. Es kann aber auch ein gasförmiges Medium sein, welches sich beim Expandieren in einer Kammer, in welcher sich auch das FGL-Element befindet, ausdehnt und dadurch das FGL-Element abkühlt.

### Kurzbeschreibung der Zeichnungen

Die Erfindung wird im Folgenden beispielhaft unter Bezugnahme auf die Zeichnungen beschrieben.
- Fig. 1: ist eine Prinzipdarstellung einer erfindungsgemäßen Ausführungsform.
- Fig. 2-16: sind weitere Prinzipdarstellungen weiterer erfindungsgemäßer Ausführungsformen.

### Detaillierte Beschreibung der Erfindung

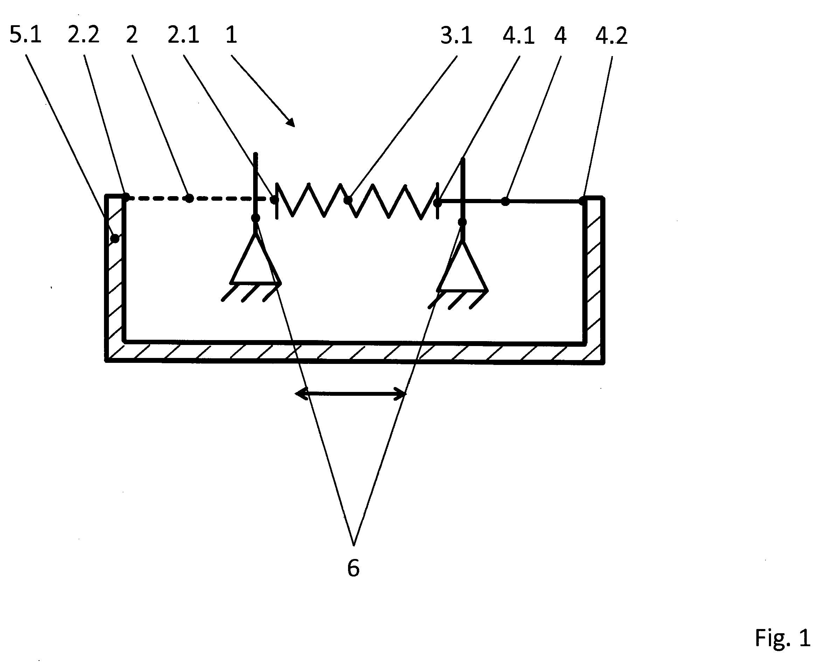

In den Fig. 1-16 sind verschiedene erfindungsgemäße Ausführungsformen dargestellt. Diese Varianten stellen bevorzugte Ausführungsformen dar, es sind natürlich weitere Ausführungsformen im Rahmen des Erfindungsumfangs möglich. Bei allen Ausführungsvarianten erfolgt die Anordnung so, dass die FGL-Elemente durch die Federelemente in einer gespannten Position gehalten werden, wobei die Federelemente in einem geraden Abschnitt der FGL-Elemente angeordnet sind. Die Anordnung aller Komponenten ist weiters so ausgeführt, dass sie gemeinsam ein geschlossenes System bilden. Wenn nicht darauf hingewiesen wird, bezieht sich die Ausführung einer Variante immer auf die vorangegangen Figuren.

Fig. 1 zeigt das allgemeine Prinzip der Erfindung. Ein erstes Stellelement 5.1 ist mit jeweils einem zweiten Ende 2.2, 4.2 eines ersten FGL-Elements 2 und eines zweiten FGL-Elements 4 wirkverbunden. Die ersten Enden 2.1, 4.1 der beiden FGL-Elemente 2, 4 sind mit einem frei beweglichen ersten Federelement 3.1 verbunden. Im Bereich der ersten Enden 2.1, 4.1 der beiden FGL-Drähte sind mechanische Anschläge 6 vorgesehen, die eine mögliche Längsverschiebung der FGL-Drähte 2, 4 und damit des ersten Stellelements 5.1 begrenzen. Die mechanischen Anschläge 6 sind an den FGL-Elementen 2, 4 zwischen dem zumindest einen ersten Federelement 3.1 und dem zumindest einem ersten Stellelement 5.1 angeordnet. Die mechanischen Anschläge 6 sind erforderlich, um das jeweilige verkürzte FGL- Element in seine Ausgangslänge zurück zu bringen, indem sich das erste Federelement 3.1 gegen den entsprechenden mechanischen Anschlag 6 abstützt und so eine Längung des Gegen FGL-Elements ermöglicht. Der Abstand der mechanischen Anschläge 6 zu den zweiten Enden 2.2, 4.2 ist so gewählt, dass das erste Stellelement 5.1 zuverlässig seine Funktion erfüllen kann. Das erste Stellelement 5.1 wird beim Erwärmen, des ersten FGL-Drahts 2, wobei sich der FGL-Draht 2 verkürzt, in Richtung des erwärmten FGL-Drahts 2 verschoben und verbleibt in einer bevorzugten Ausführungsform in dieser Endstellung, beispielsweise durch verrasten. Nach dem Erwärmen kann sich durch Abkühlung der FGL-Draht 2 wieder längen und würde aufgrund der auftretenden Überlänge durchhängen. Das erste Federelement 3.1 gleicht jedoch den Längenunterschied des durchhängenden FGL-Drahts 2 aus, wodurch dieser seine gespannte Position beibehält. Da sich das erste Stellelement 5.1 in Richtung des ersten Federelements 3.1 verschiebt, wird der FGL-Draht 4 gelängt. Das erste Federelement 3.1 gleicht jedoch durch Dehnen den erforderlich Längenausgleich für den zweiten FGL-Draht 4 aus. Der mechanische Anschlag 6 begrenzt die Bewegung des ersten Federelements 3.1, in dem das erste Federelement 3.1 auf Kontakt mit dem mechanischen Anschlag 6 geht, wodurch ein weiteres Verschieben des ersten Stellelements 5.1 verhindert wird. Soll das erste Stellelement 5.1 in seine Grundstellung zurück bewegt werden, wird der zweite FGL-Draht 4 erwärmt. Das Erwärmen erfolgt beispielsweise durch Bestromen von FGL-Draht 4.

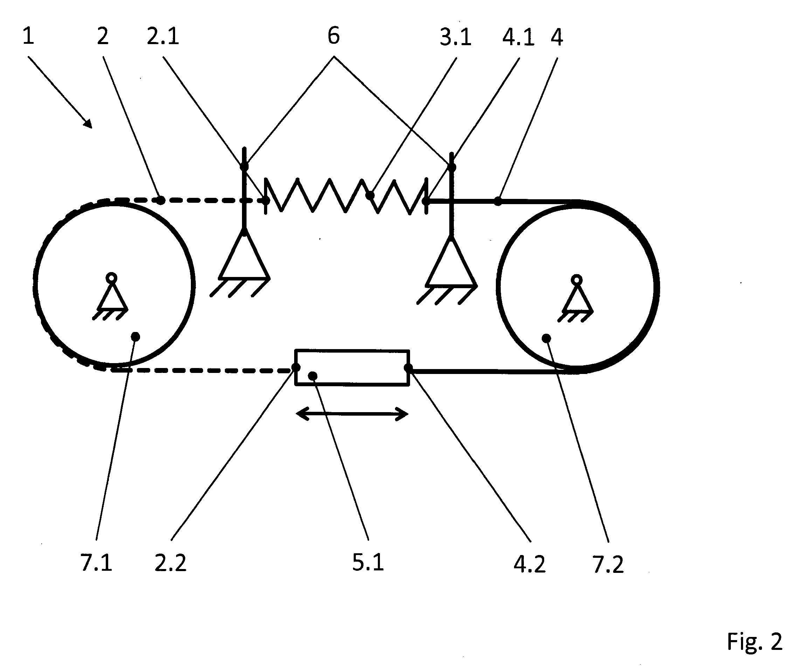

In Fig. 2 wird eine weitere erfindungsgemäße Variante einer Aktuatorvorrichtung 1 dargestellt. Die FGL-Elemente 2, 4 werden durch Umlenkrollen 7.1, 7.2 umgelenkt, wobei die Umlenkrollen 7.1, 7.2 ortsfest gelagert sind. Die FGL-Elemente 2, 4 bilden mit dem ersten Federelement 3.1 und dem Stellelement 5.1 ein geschlossenes System. Die FGL- Elemente 2, 4 sind dabei in einer bevorzugten Ausführungsform 180° um die Umlenkrollen 7.1, 7.2 umgelenkt. Diese Ausführungsform findet bevorzugt dann Anwendung, wenn die FGL-Elemente 2, 4 eine größere Länge aufweisen sollen, um einen ausreichenden Stellweg des FGL-Drahts, zum Bewegen des Stellelements 5.1, zu erreichen. Es ist daher möglich, dass auch mehrere Umlenkrollen je FGL-Draht vorgesehen sein können, insbesondere wenn es der vorgegebene Platzbedarf erfordert. Die ersten Enden 2.1, 4.1 der beiden FGL-Elemente 2, 4 sind hierbei mit dem ersten Federelement 3 verbunden. Die beiden zweiten Enden 2.2, 4.2 der FGL-Elemente sind mit dem ersten Stellelement 5.1 verbunden. Die Umlenkrollen 7.1, 7.2 sind zwischen dem ersten Ende 2.1, 4.1 und zweiten Ende 2.2, 4.2 des jeweiligen FGL-Drahts 2, 4 angeordnet. An den jeweiligen ersten Enden 2.1, 4.1 der beiden FGL-Elemente sind mechanische Anschläge 6 vorgesehen, welche ein Längsverschieben der FGL-Elemente 2,4, bei Erwärmung dieser, begrenzen.

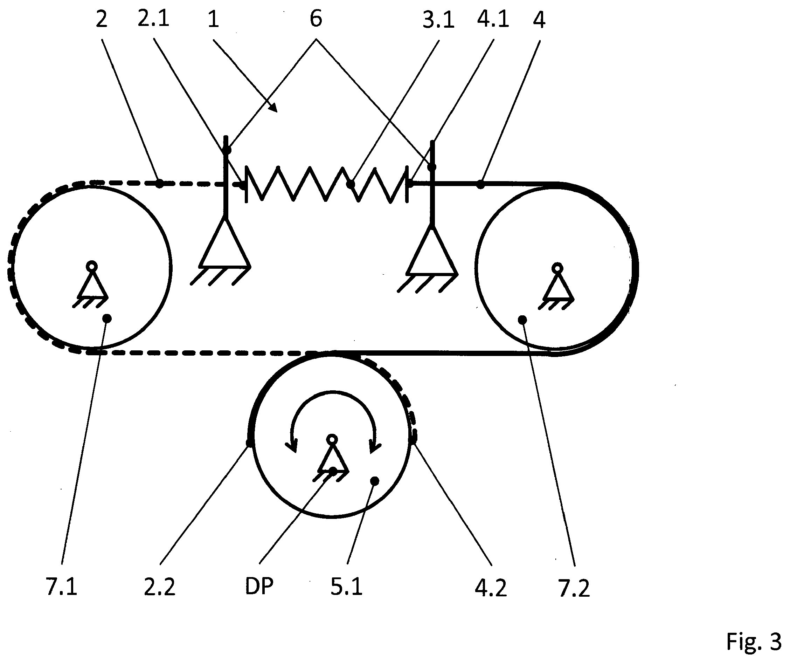

Eine rotatorische Bewegung des ersten Stellelements 5.1 wird in Fig. 3 dargestellt. Der Aufbau bei dieser Ausführungsform entspricht im Wesentlichen jener in Fig. 2, wobei das erste Stellelement 5.1 nicht translatorisch bewegbar ist. Das erste Stellelement 5.1 weist wie die Umlenkrollen 7.1, 7.2 ein Festlager auf, um welches das erste Stellelement 5.1 verdrehbar ist. Die beiden zweiten Enden 2.2, 4.2 der beiden FGL-Elemente 2, 4 sind am Umfang des ersten Stellelements 5.1 mit diesem kraft- und/oder formschlüssig verbunden. Bei Erwärmung eines FGL-Drahts wird durch Verkürzung des erwärmten FGL-Drahts das erste Stellelement 5.1 entsprechend der Längsveränderung des FGL-Drahts in Richtung des erwärmten FGL-Drahts verdreht.

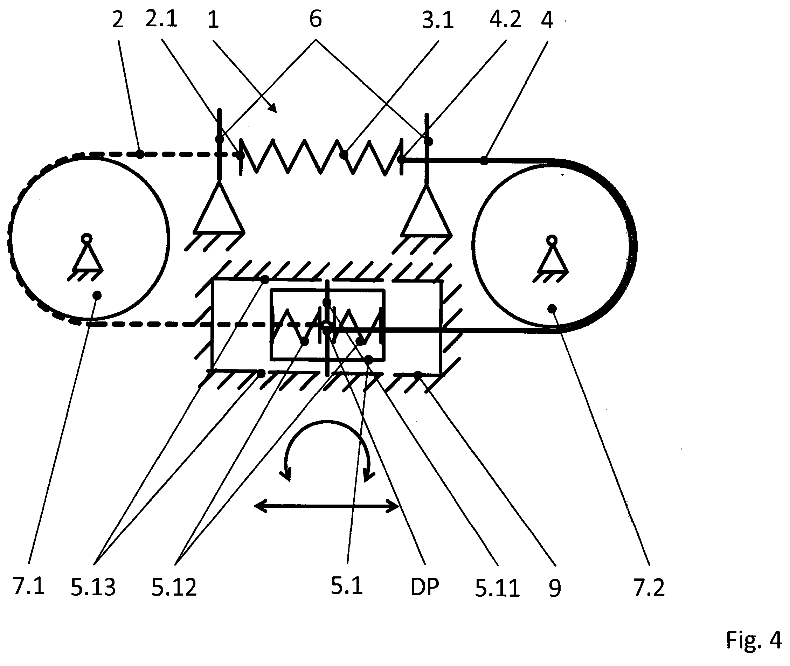

In Fig. 4 ist eine Variante dargestellt, in welcher das erste Stellelement 5.1 längsverschieblich ist. Das erste Stellelement 5.1 ist in einer Rasteinrichtung 9 angeordnet und weist ein um einen Drehpunkt DP bewegliches, richtungsunabhängig auslösendes und verriegelndes Rastmittel 5.11 auf, welche in Rastöffnungen 5.13 einer Rasteinrichtung 9 einrasten kann. Der Drehpunkt DP ist dabei in einer bevorzugen Ausführungsform mittig des ersten Stellelements 5.1 angeordnet. Das erste Stellelement 5.1 weist in einer bevorzugten Ausführungsform einen rechteckigen Querschnitt auf. Das verdrehbare Rastmittel 5.11 ist mit dem Drehpunkt DP drehbar verbunden, wobei der Drehpunkt mittig mit dem Rastmittel 5.11 verbunden ist. Das verdrehbare Rastmittel 5.11 erstrecket sich dabei im Wesentlichen Parallel zur Normalebene der FGL-Elemente, wobei das Rastmittel 5.11 eine Länge aufweist, welche größer als eine der seitlichen Außenwandungen des ersten Stellelements 5.1 ist, so dass es aus dem ersten Stellelement 5.1 ragt. Die seitlichen Außenwandungen des ersten Stellelements 5.1 verlaufen im Wesentlichen parallel zum Rastmittel 5.11. Zwei einander gegenüberliegende Rückstellfedern 5.12, welche innerhalb des ersten Stellelements 5.1 angeordnet sind und sich jeweils von einer der seitlichen Außenwandungen in Richtung Mitte bis zum Rastmittel 5.11 erstrecken, erzeugen eine Kraft, welche das verdrehbare Rastmittel 5.11 in eine der Rastöffnungen 5.13 der Rasteinrichtung 9 drücken. Die Rasteinrichtung 9 weist eine Vielzahl von Rastöffnungen 5.13 auf, welche in einer bevorzugten Ausführungsform mehrfach in der Rasteinrichtung 9 einander gegenüberliegend in Gleitflächen vorgesehen sind. Die Gleitflächen sind im Wesentlichen Normal zum Rastmittel 5.11 angeordnet. Das Rastmittel wird während der Bewegung des ersten Stellelements 5.1 um den Drehpunkt DP verdreht, wodurch die Rückstellfedern 5.12 gegen die seitlichen Außenwände gedrückt werden. Wenn das erste Stellmittel 5.1 an einer der Rastöffnungen 5.13 vorbei bewegt wird, drücken die Rückstellfedern 5.12 das Rastmittel 5.11 in eine der einander gegenüberliegenden Rastöffnungen 5.13. Bei Erwärmen eines der FGL-Elemente wird das Rastmittel 5.11 aus der Rastöffnung 5.13 heraus gedrückt und in Richtung des erwärmten FGL-Drahts bis zur nächsten Rastöffnung 5.13 bewegt. Mechanische Anschläge verhindern, dass das erste Stellelement 5.1 zu weit in eine Richtung verschoben werden kann.

Das Stellelement 5.1 kann auch eine alternative Ausbildung aufweisen. Beispielsweise kann das Rastmittel 5.11 ein Exzenter sein, der in eine Rastöffnung eingreift. Das Rastmittel 5.1 kann jede im Stand der Technik bekannte Ausbildung aufweisen, welche zum Einrasten und Lösen aus Rastmechanismen geeignet sind, beispielsweise ein Klinkenmechanismus.

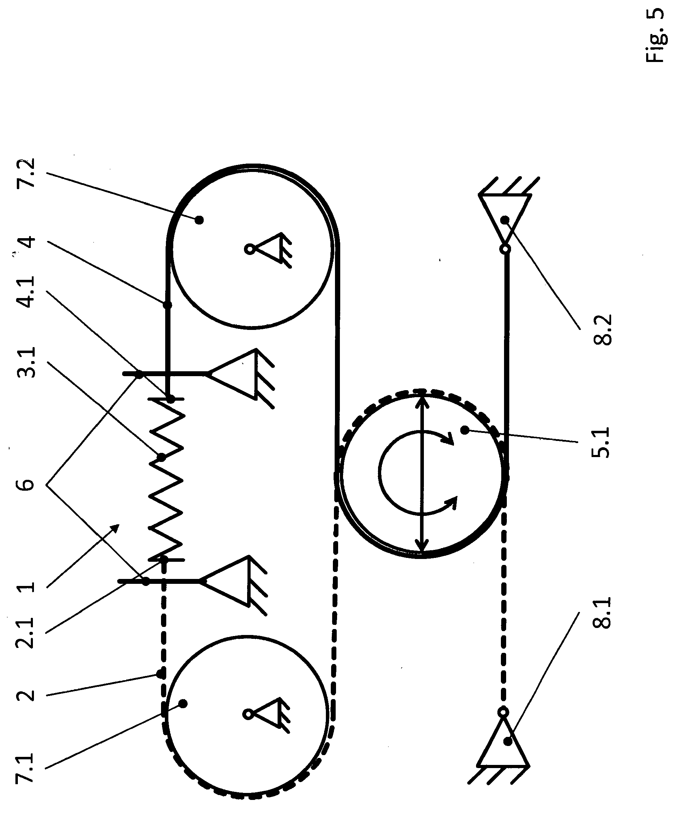

Die beiden zweiten Enden der FGL-Elemente 2, 4 sind in der in Fig. 5 dargestellten Ausführungsform mit Festlagern 8 verbunden. Das erste Stellelement 5.1 weist kein Festlager auf, sondern ist in einer bevorzugten Ausführungsform schwimmend gelagert und kann daher translatorisch und/oder rotatorisch bewegt werden. Die FGL-Elemente 2, 4 sind mit dem ersten Stellelement 5.1 kraft- und/oder formschlüssig verbunden. Der Bewegungsablauf des ersten Stellelements 5.1 kann beliebig erfolgen, beispielsweise kann zuerst eine translatorische Bewegung und danach eine rotatorische Bewegung erfolgen, oder umgekehrt. In einer weiteren erfinderischen Ausführungsform kann die translatorische Bewegung gleichzeitig mit der rotatorischen erfolgen. Bevorzugt findet ein solcher Bewegungsablauf des ersten Stellelements 5.1 in einer Kulissenbahn statt. In einer bevorzugten Ausführungsform sind die FGL-Elemente 2, 4 jeweils um 180°, um das erste Stellelement 5.1, umgelenkt mit den Festlagern 8.1 bzw. 8.2 verbunden.

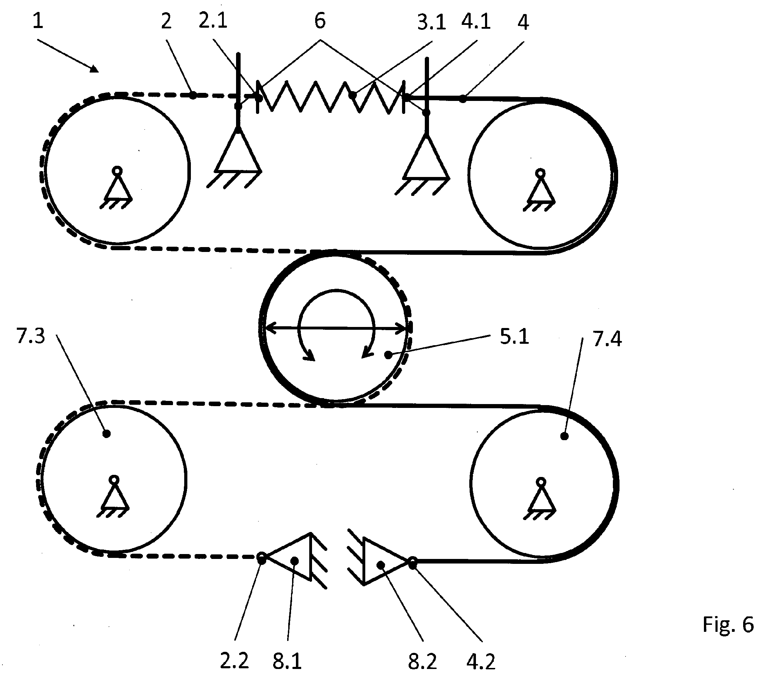

Die Ausführungsform in Fig. 6 unterscheidet sich von jener in Fig.5 dadurch, dass zwischen dem translatorisch und/oder rotatorisch bewegbaren ersten Stellelement 5.1 und den Festlagern 8.1, 8.2 jeweils eine weitere Umlenkrolle 7.3, 7.4 angeordnet ist. Die FGL Elemente 2, 4 sind hier ebenfalls um 180° umgelenkt, die beiden zweiten Enden 2.2 und 4.2 mit den Festlagern verbunden. Die zusätzlichen Umlenkrollen 7.3, 7.4 bewirken längere FGL-Elemente 2, 4 und somit einen zusätzlichen Stellweg der FGL-Elemente 2, 4. Wenn die Festlager 8.1, 8.2 nahe beieinander liegen, können die beiden FGL-Elemente 2, 4 mit einem gemeinsamen Festlager verbunden werden. Eine alternative Variante wäre anstatt der Festlager 8.1, 8.2 beide FGL-Elemente 2, 4 miteinander zu verbinden.

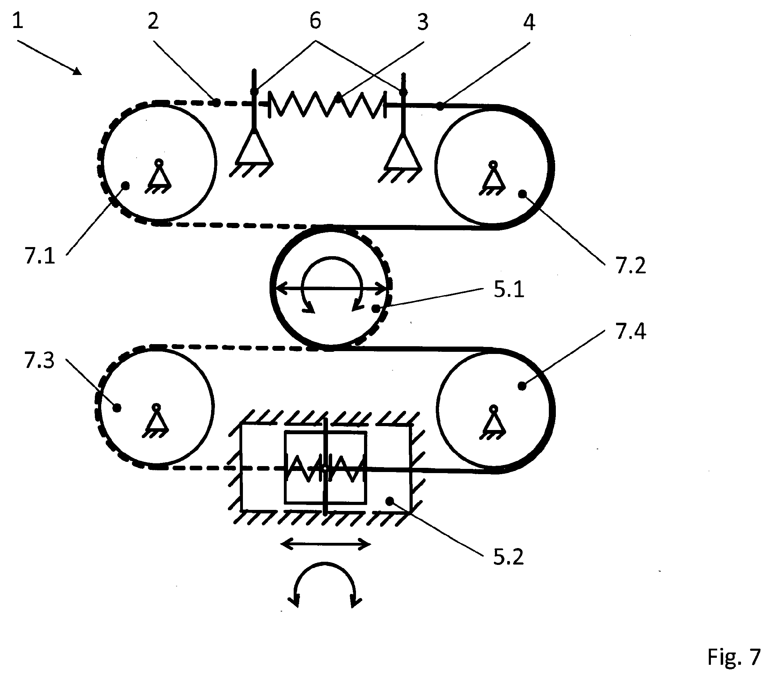

Fig. 7 ist im Prinzip wie Fig. 6 ausgebildet, die beiden zweiten Enden 2.2, 4.2 der FGL-Elemente 2, 4 sind in dieser Ausführungsform nicht mit Festlagern sondern mit einem zweiten Stellelement 5.2, wie in Fig. 4 bereits beschrieben, verbunden. Die beiden Stellelemente 5.1, 5.2 sind sozusagen in "Serie" angeordnet.

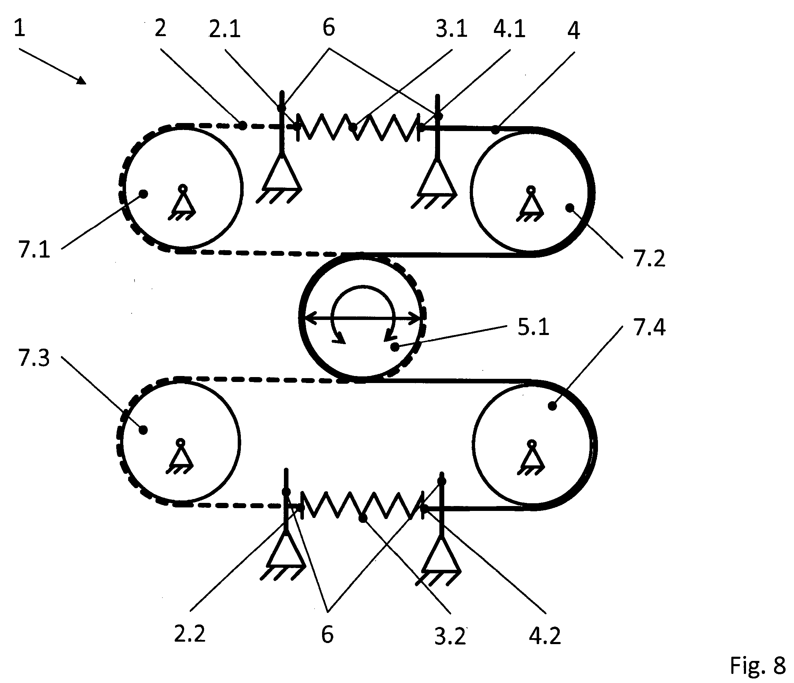

Die Ausführungsvariante in Fig. 8 entspricht im Wesentlichen ebenfalls jener von Fig. 6, die zweiten Enden 2.2, 4.2 der beiden FGL-Elemente 2, 4 sind jedoch nicht mit Festlagern sondern mit einem zweiten Federelement 3.2, welches ebenfalls als Längenausgleich für die FGL-Elemente 2, 4 dient, verbunden. Das zweite Federelement 3.2 ist wie das erste Federelement 3.1 freibeweglich ausgebildet. Bei dieser Ausführungsform können beide Federelemente 3.1, 3.2 kürzer ausgebildet werden, da beide Federelemente den Längenausgleich machen. In der Nähe der beiden zweiten Enden 2.2, 4.2 sind ebenfalls mechanische Anschläge 6, vorgesehen.

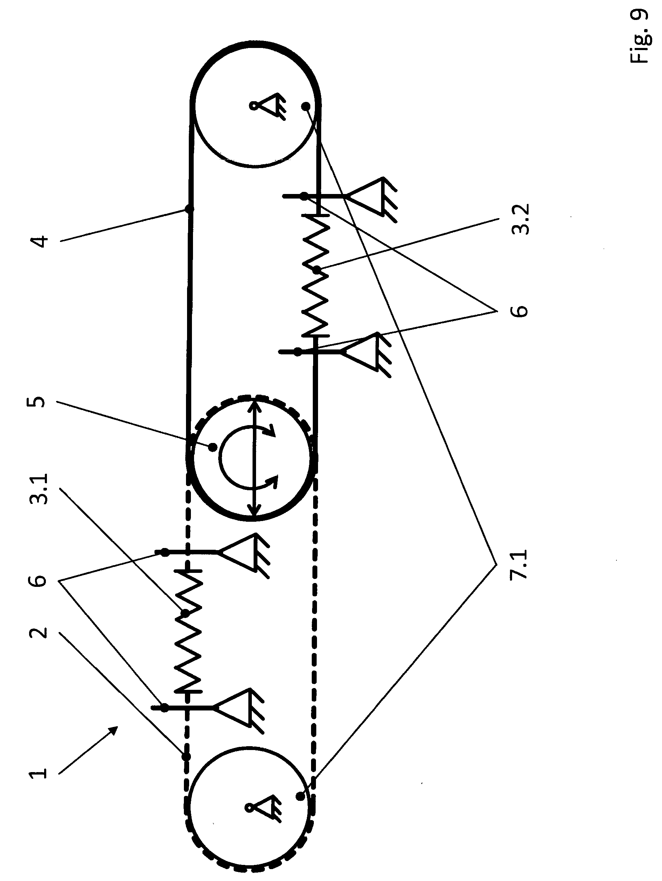

In Fig. 9 unterscheidet sich die Ausführungsvariante dadurch, dass zwei Federelemente 3.1, 3.2 vorgesehen sind, wobei das erste Federelement 3.1 mit dem ersten Ende 2.1 und dem zweiten Ende 2.2 des ersten FGL-Drahts 2 verbunden ist und das zweite Federelement 3.2 mit dem ersten Ende 4.1 und dem zweiten Ende 4.2 des zweiten FGL-Drahts 4 verbunden ist. Das erste Stellelement 5.1 ist kraft- und/oder formschlüssig mit den FGL-Elementen 2, 4 verbunden und im Wesentlichen mittig zwischen den Umlenkrollen 7.1 angeordnet, so dass das erste Stellelement 5.1 mit je einer Umlenkrolle 7.1 ein geschlossenes System bildet. In einer bevorzugten Ausführungsform sind beide FGL-Elemente 2, 4 180° um die Umlenkrollen 7.1 und dem ersten Stellelement 5.1 umgelenkt. Die Federelemente 3.1, 3.2 sind in einem geraden Abschnitt der FGL-Elemente 2, 4 angeordnet.

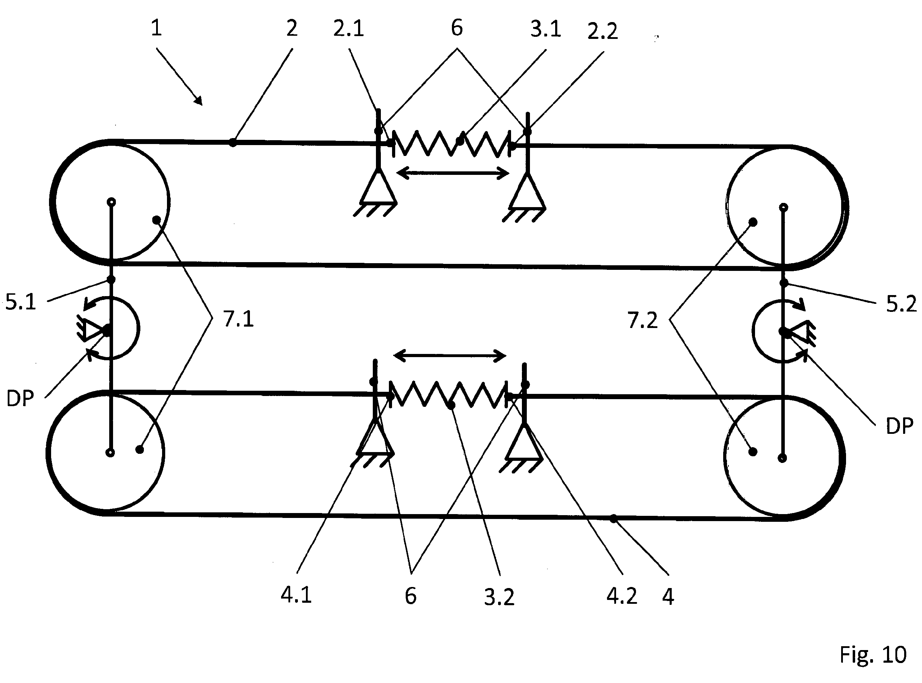

In Fig. 10 sind das erste Ende 2.1 und das zweite Ende 2.2 eines ersten FGL-Drahts 2 mit einem ersten Federelement 3.1 und das erste Ende 4.1 und das zweite Ende 4.2 eines zweiten FGL-Drahts 4 mit einem zweiten Federelement 3.2 verbunden, wobei jeweils ein FGL-Draht 2, 4 und ein Federelement 3.1, 3.2 ein geschlossenes System bilden, welches durch zwei einander gegenüberliegenden Umlenkrollen 7.1, 7.2 in eine gespannte Lage gebracht wird und wobei der jeweilige FGL-Draht 2, 4 in einer bevorzugten Ausführungsform um 180° um die Umlenkrollen 7.1, 7.2 umgelenkt ist. Alle Umlenkrollen 7.1, 7.2 sind dabei schwimmend gelagert. An den FGL-Elementen 2, 4 sind mechanische Anschläge 6 in der Nähe der ersten Enden 2.1, 4.1 und zweiten Enden 2.2, 4.2 der FGL-Elemente 2, 4 vorgesehen und begrenzen die Verschiebelänge der FGL-Elemente 2, 4, wenn diese erwärmt werden. Dabei ist eine erste Umlenkrolle 7.1 des ersten FGL-Drahts 2 über ein erstes Stellelement 5.1 mit einer ersten Umlenkrolle 7.1 des zweiten FGL-Drahts 4 wirkverbunden. Das gleiche gilt für die zweite Umlenkrolle 7.2 des ersten FGL-Drahts, welche über ein zweites Stellelement 5.2, mit der zweiten Umlenkrolle 7.2 des zweiten FGL-Drahts 4 wirkverbunden ist, wodurch die beiden geschlossenen Systeme zu einem gemeinsam geschlossenen System verbunden werden. Die beiden Stellelemente 5.1, 5.2 weisen jeweils einen bevorzugt mittig des jeweiligen Stellelements 5.1, 5.2 angeordneten Drehpunkt DP auf, um welchen die Stellelemente 5.1, 5.2 jeweils verdrehbar sind. Wird nun ein FGL-Draht erwärmt, beispielsweise der erste FGL-Draht 2, werden die beiden Umlenkrollen 7.1, 7.2 des ersten FGL-Drahts 2, aufgrund der Verkürzung des ersten FGL-Drahts 2 zusammengezogen, wodurch beide Stellelemente 5.1, 5.2 um ihre Drehpunkte DP verdreht werden. Da die beiden Stellelemente 5.1, 5.2 mit jeweils einer ersten Umlenkrolle 7.1 und zweiten Umlenkrolle 7.2 des ersten FGL-Drahts 2 und zweiten FGL-Drahts 4 wirkverbunden sind, wobei alle Umlenkrollen 7.1, 7.2 schwimmend gelagert sind, werden die beiden Umlenkrollen 7.1, 7.2 des zweiten FGL-Drahts 4 voneinander wegbewegt, wodurch das zweite Federelement 3.2 durch Ausdehnen den Längenausgleich für das geschlossene System, umfassend den zweiten FGL-Draht 4, durchführt. Die beiden Federelemente 3.1, 3.2 sind bevorzugt in einem geraden Abschnitt der FGL-Elemente 2, 4 zwischen den Umlenkrollen 7.1, 7.2 vorgesehen und sind jeweils durch die mechanischen Anschläge 6 in ihrer Verschiebelänge begrenzt.

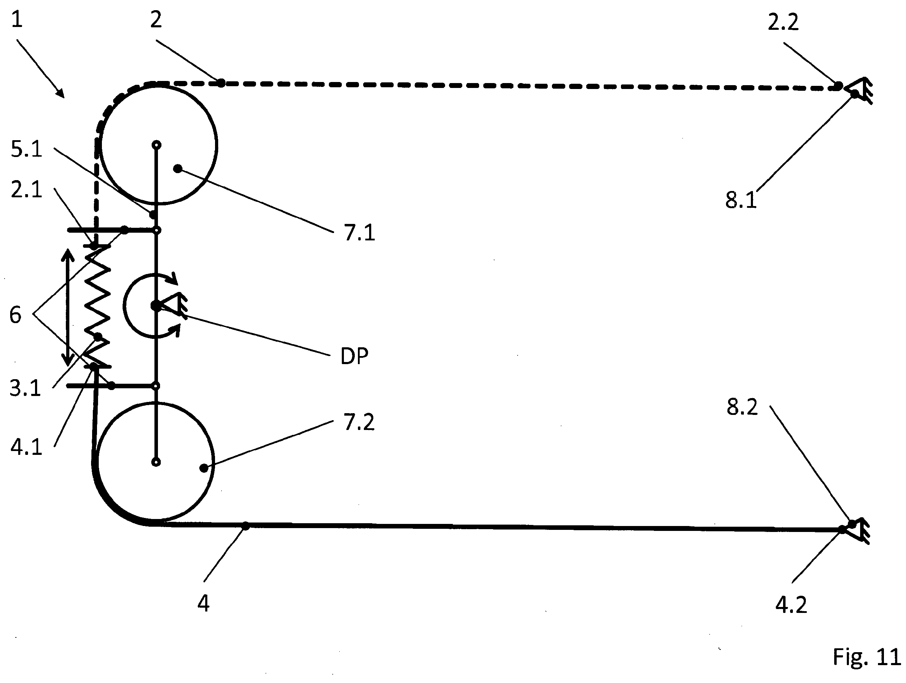

In Fig. 11 ist das erste Federelement 3.1 mit dem ersten Ende 2.1 des ersten FGL-Drahts 2 und dem ersten Ende 4.1 des zweiten FGL Drahts 4 verbunden. Die beiden zweiten Enden 2.2, 4.2 der beiden FGL-Elemente 2, 4 sind jeweils mit einem Festlager 8.1 bzw. 8.2 verbunden, wobei die FGL-Elemente 2, 4 in einer bevorzugten Ausführungsform 90° um die Umlenkrollen 7.1, 7.2 umgelenkt sind. Ein erstes Stellelement 5.1 ist mit den Umlenkrollen 7.1, 7.2 wirkverbunden und weist mittig einen Drehpunkt DP auf, um welchen sich das erste Stellelement 5.1 bei Erwärmung eines FGL-Drahts verdrehen kann. Die Umlenkrollen 7.1, 7.2 sind schwimmend gelagert und kraft- und oder formschlüssig mit den FGL-Elementen 2, 4 verbunden. Bei Erwärmung des ersten FGL-Drahts 2 verkürzt sich dieser wodurch die Umlenkrolle 7.1 im Wesentlichen in Richtung des Festlagers 8.1 bewegt wird. Dadurch wird das erste Stellelement 5.1 um den Drehpunkt DP verdreht, wodurch die Umlenkrolle 7.2 in die entgegengesetzte Richtung der Umlenkrolle 7.1 bewegt wird. Das Federelement 3 dient gleichzeitig für den erforderlichen Längenausgleich des FGL-Drahts 4.

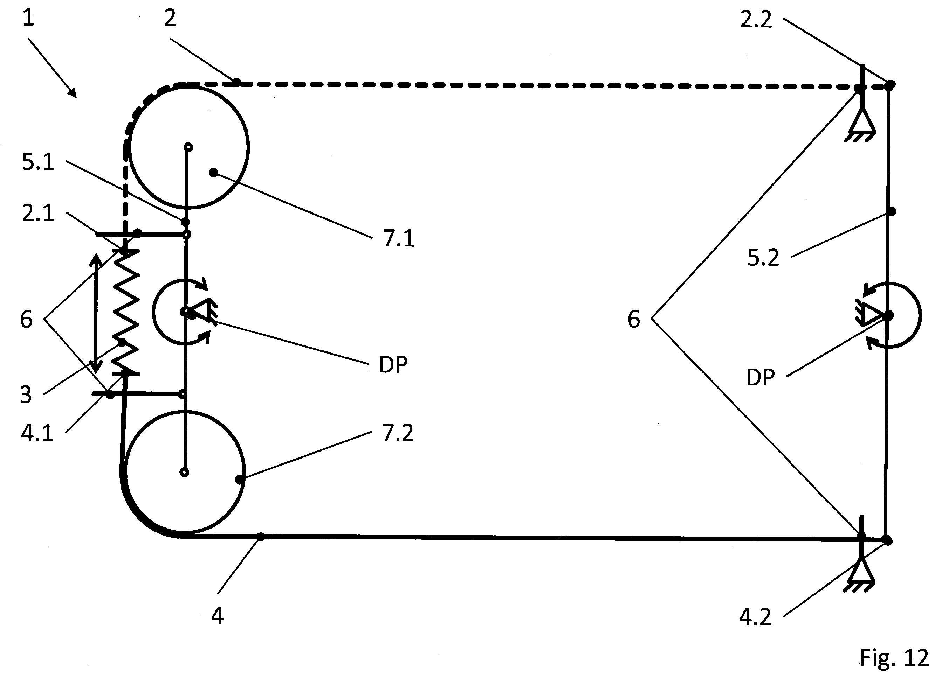

Fig. 12 unterscheidet sich von Fig. 11 insofern, dass die beiden zweiten Enden 2.2, 4.2 der FGL-Elemente 2, 4 mit einem zweiten Stellelement 5.2 verbunden sind. Das zweite Stellelement 5.2 weist mittig einen Drehpunkt DP auf, um welchen das Stellelement 5.2 verdrehbar ist. Bei Erwärmung eines FGL-Drahts wird die mit dem FGL-Draht verbundene Umlenkrolle mitbewegt. Die beiden Stellelemente 5.1, 5.2 werden gegensinnig verdreht. In einer bevorzugten Ausführungsform sind auch in der Nähe der zweiten Enden 2.2, 4.2 der FGL-Elemente 2, 4 mechanische Anschläge 6 vorgesehen, welche eine Verdrehung des zweiten Stellelements 5.2 begrenzen.

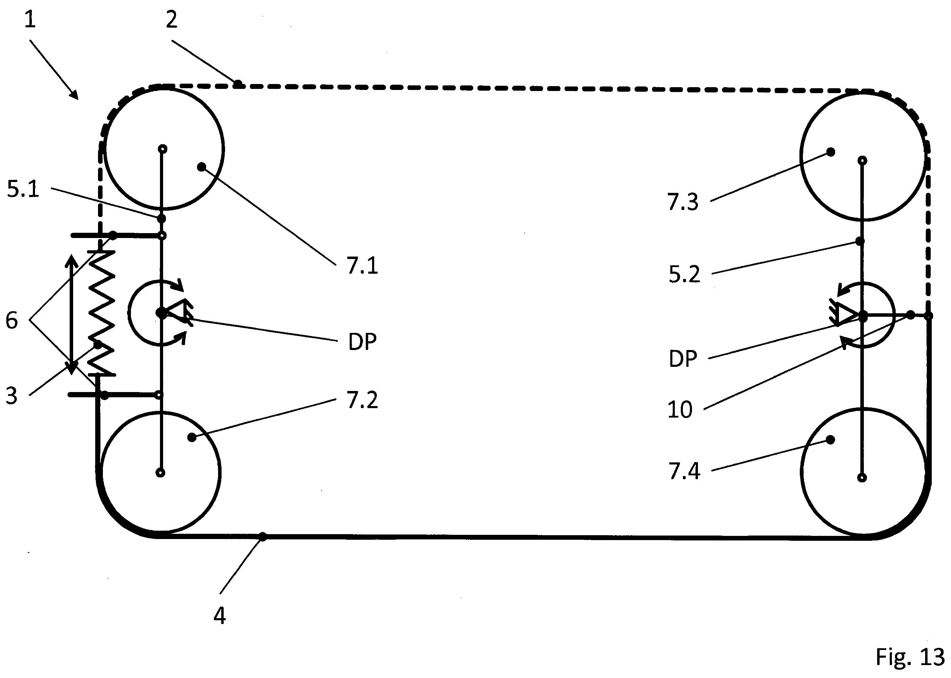

In Fig. 13 werden die beiden zweiten Enden 2.2, 4.2 entweder direkt mit dem Drehpunkt DP des zweiten Stellelements 5.2 verbunden, oder, wie in Fig. 13 dargestellt, über ein Verbindungselement 10, welches starr mit dem Drehpunkt DP verbunden ist. Das zweite Stellelement 5.2 ist mit zwei weiteren Umlenkrollen 7.3, 7.4 wirkverbunden. Die FGL-Elemente 2, 4 werden in einer bevorzugten Ausführungsform 90° um die Umlenkrollen 7.3, 7.4 umgelenkt. Eine andere Möglichkeit wäre FGL-Draht 2, 4 jeweils mit einem Festlager 8.1, 8.2 zu verbinden. Eine weitere Möglichkeit wäre FGL-Draht 2 mit Umlenkrolle 7.3 und FGL-Draht 4 mit Umlenkrolle 7.4 zu verbinden.

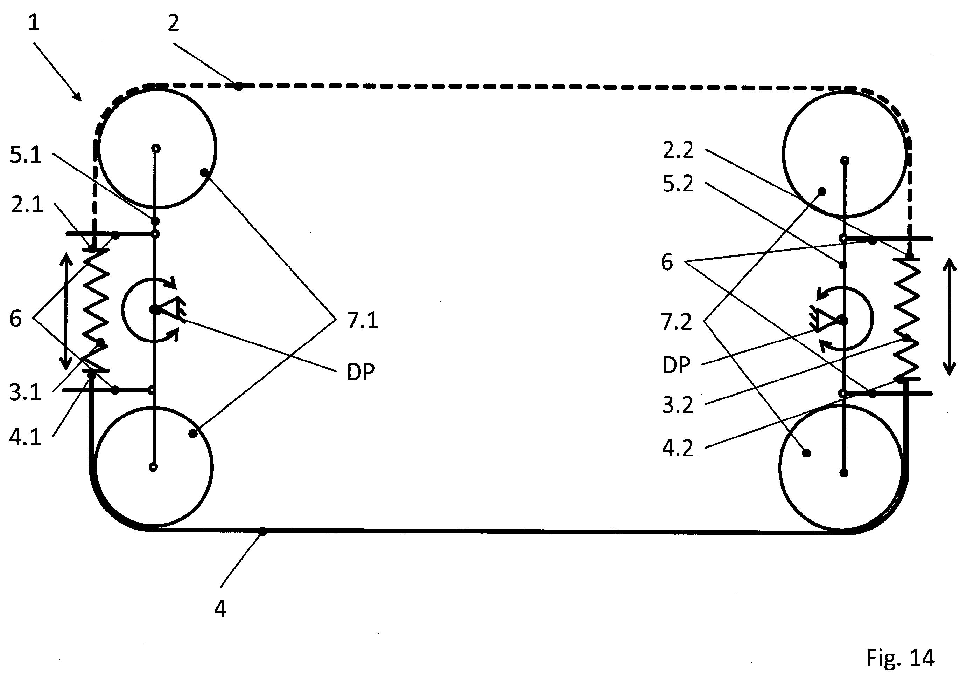

In Fig. 14 sind die beiden zweiten Enden 2.2, 4.2 der FGL-Elemente 2, 4 mit einem zweiten Federelement 3.2 verbunden. In der Nähe der beiden zweiten Enden 2.2, 4.2 sind mechanische Anschläge zur Begrenzung der Verschiebelänge der FGL-Elemente 2, 4 angeordnet.

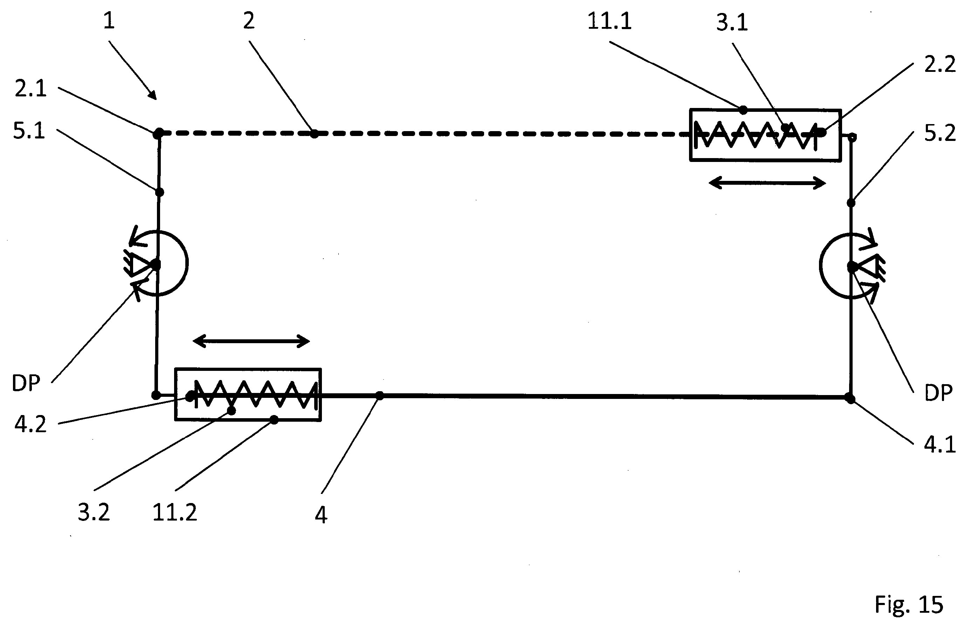

Ein anderes Konzept wird in Fig. 15 dargestellt. Bei dieser Ausführungsform sind ein erstes Federelement 3.1 und ein zweites Federelement 3.2 jeweils in einem Federgehäuse 11.1, 11.2 untergebracht. Das Federelement 3.1 bzw. 3.2 ist im Federgehäuse 11.1 bzw. 11.2 so angeordnet, dass eine erste Stirnseite des Federelements an einer ersten Stirnseite des Federgehäuses 11.1 bzw. 11.2 innen anliegt. Der FGL-Draht ist durch das Federgehäuse und das Federelement geführt und an einer zweiten Stirnseite des Federelements mit diesem am ersten Ende des FGL-Drahts verbunden, wobei die zweite Stirnseite des Federelements von der zweiten Stirnseite des Federgehäuses, in einer bevorzugten Ausführungsform, beabstandet ist. Die Federgehäuse 11.1, 11.2 sind an der zweiten Stirnseite des Federgehäuses jeweils mit einem ersten Ende eines Stellelements 5.1 bzw. 5.2 verbunden. Die zweiten Enden 2.2, 4.2 der FGL-Elemente 2, 4 sind mit einem zweiten Ende der Stellelemente 5.1. 5.2 verbunden, wobei jeweils ein FGL-Draht mit seinen zwei Enden mit beiden Stellelementen verbunden ist, so dass sie gemeinsam ein geschlossenes System bilden. Die FGL-Elemente 2, 4 werden durch die Federelemente 3.1, 3.2 in einer gespannten Position gehalten. Die Federgehäuse 11.1, 11.2 stehen in einer bevorzugten Ausführungsform Normal zu den Stellelementen 5.1, 5.2. Die Stellelemente 5.1, 5.2 sind parallel zueinander gegenüberliegend beabstandet angeordnet und weisen jeweils bevorzugt mittig angeordnet einen Drehpunkt DP auf, um den sie verdrehbar gelagert sind. Die Federgehäuse 11.1, 11.2 sind in einer bevorzugten Ausführungsform diagonal gegenüberliegend des anderen Federgehäuses angeordnet. Wird nun beispielsweise FGL-Draht 2 erwärmt, werden das mit dem ersten Ende 2.1 des FGL-Draht 2 verbundene Ende des Stellelements 5.1 bzw. das mit dem Federgehäuse 11.1 verbundene Ende des anderen Stellelements 5.2, zusammengezogen, wodurch sich beide Stellelemente 5.1, 5.2 um ihre Drehpunkte DP verdrehen. Das über das Federgehäuse 11.2, mit dem Stellelement 5.2 verbundene, zweite Federelement 3.2 muss den durch die Verdrehung der Stellelemente 5.1, 5.2 größer werdende Abstand zwischen den beiden Enden der Stellelemente 5.1, 5.2 durch Dehnung ausgleichen.

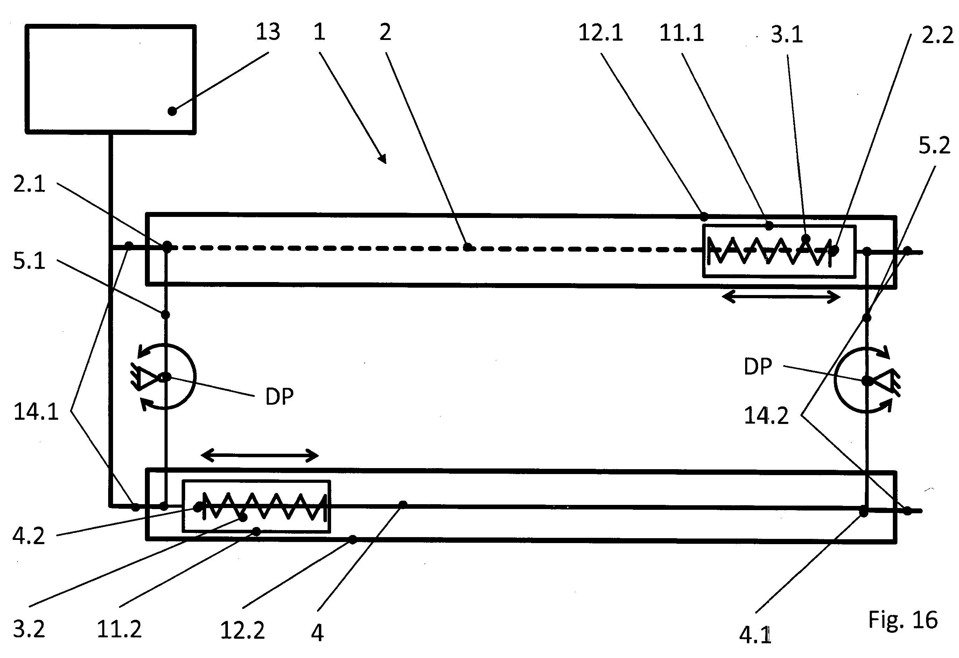

In Fig. 16 wird eine aktive Kühlung für die FGL-Elemente 2, 4 dargestellt. Der Aufbau der Aktuatorvorrichtung 1 entspricht jener von Fig. 15, gilt jedoch im Prinzip für alle Varianten. Die FGL-Elemente 2, 4 sind dabei jeweils teilweise oder vollständig in einer Kühlkammer 12.1, 12.2 angeordnet. Beide Kühlkammern 12.1, 12.2 sind mit einem Druckspeicher 13 verbunden in dem ein geeignetes Kühlmedium, beispielsweise Luft, untergebracht ist. Die Kühlkammern 12.1, 12.2 weisen jeweils zumindest ein Einlassventil 14.1 und zumindest ein Auslassventil 14.2 auf. Die Einlass- und Auslassventile 14.1, 14.2 werden bei Verdrehung der Stellelemente 5.1, 5.2 geöffnet bzw. geschlossen. Das Öffnen und Schließen kann direkt durch Koppelung der Einlass- und Auslassventile 14.1, 14.2 mit den Stellelementen 5.1, 5.2 oder den FGL-Elementen 2, 4 erfolgen, oder elektronisch gesteuert. Zum schnellen Abkühlen ist es vorteilhaft, wenn das Umgebungsmedium ein niedriges Temperaturniveau aufweist. Es wird abwechselnd, bei einer Kühlkammer das Einlassventil geöffnet, während in der anderen Kühlkammer das Einlassventil geschlossen wird. Es wird dabei immer jenes Einlassventil geöffnet, dessen FGL-Draht nicht erwärmt wird,. Dadurch kann das Kühlmedium vom Druckspeicher 13 in die Kühlkammer expandieren, wodurch sich die Umgebungstemperatur in der Kühlkammer absenkt. Aus der anderen Kühlkammer kann das Kühlmedium aus dem geöffneten Auslassventil entweichen.

Die Kühlkammern 12.1, 12.2 müssen keine Auslassventile 14.1, 14.2 aufweisen, es kann auch nur eine Öffnung bevorzugt am dem Ventileinlass entgegengesetzten Ende der Kühlkammer 12.1, 12.2 vorgesehen sein, aus der das Kühlmedium ausströmen kann.

Es wird nochmals darauf hingewiesen, dass bei allen Ausführungsformen keine, eine oder eine Vielzahl von Umlenkrollen vorgesehen werden können, die entweder beweglich und/oder ortsfest angeordnet sein können. Weiter können die Stellelemente eine Ausbildung aufweisen, wie sie im Stand der Technik, beispielsweise bei Ventilen als Ventilkörper oder bei Verriegelungseinheiten als Verriegelungselemente, bekannt sind.
Es wird auch nochmals darauf hingewiesen, dass die Darstellungen nur beispielhaft sind und die Anordnungen der Bauteile zueinander beliebige geeignete Abstände und Winkel aufweisen können.

### Bezugszeichenliste

- 1: Aktuatorvorrichtung
- 2: erstes FGL-Element
- 2.1: erstes Ende
- 2.2: zweites Ende
- 3.1: erstes Federelement
- 3.2: zweites Federelement
- 4: zweites FGL-Element
- 4.1: erstes Ende
- 4.2: zweites Ende
- 5.1: erstes Stellelement
- 5.2: zweites Stellelement
- 5.11: Raste
- 5.12: Rückstellfeder
- 5.13: Rastöffnungen
- 6: mechanischer Anschlag
- 7.1, 7.2, 7.3, 7.4: Umlenkrolle
- 8.1, 8.2: Festlager
- 9: Rasteinrichtung
- 10: Verbindungselement
- 11.1, 11.2: Federgehäuse
- 12.1, 12.2: Kühlkammer
- 13: Druckspeicher
- 14.1: Einlassventil
- 14.2: Auslassventil
- DP: Drehpunkt

## Patentansprüche

1. Aktuatorvorrichtung (1) umfassend ein erstes Formgedächtnislegierungs-Element (2) und ein zweites Formgedächtnislegierungs-Element (4) sowie ein erstes Stellelement (5.1) und ein erstes Federelement (3.1), wobei das eine erste Stellelement (5.1) mit dem ersten Formgedächtnislegierungs-Element (2) und dem zweiten Formgedächtnislegierungs-Element (4) derart wirkverbunden ist, dass wenn das erste Formgedächtnislegierungs-Element (2) erwärmt wird, das erste Stellelement (5.1) in eine erste Richtung bewegt wird und wenn das zweite Formgedächtnislegierungs-Element (4) erwärmt wird, das erste Stellelement (5.1) in eine der ersten Richtung entgegengesetzte zweite Richtung bewegt wird, **dadurch gekennzeichnet dass** das erste Formgedächtnislegierungs-Element (2) und/oder das zweite Formgedächntislegierungs-Element (4) mit zumindest einem ersten Federelement (3.1) verbunden ist, wobei das erste Federelement (3.1) als Längenausgleich für das erste Formgedächtnislegierungs-Element (2) und/oder das zweite Formgedächtnislegierungs-Element (4) eingerichtet ist.

2. Aktuatorvorrichtung (1) nach zumindest einem der vorhergehenden Ansprüche,
**dadurch gekennzeichnet, dass** das erste Federelement (3.1) frei beweglich ist.

3. Aktuatorvorrichtung (1) nach zumindest einem der vorhergehenden Ansprüche,
**dadurch gekennzeichnet, dass** das erste Stellelement (5.1) nach der Bewegung in eine erste Richtung in einer Endstellung verbleibt, insbesondere einrastet.

4. Aktuatorvorrichtung (1) nach zumindest einem der vorhergehenden Ansprüche,
**dadurch gekennzeichnet, dass** die beiden Formgedächtnislegierungs-Elemente (2, 4) Drähte sind, wobei sich die Drähte bei Erwärmung verkürzen.

5. Aktuatorvorrichtung (1) nach zumindest einem der vorhergehenden Ansprüche,
**dadurch gekennzeichnet, dass**
beide Formgedächtnislegierungs-Elemente (2, 4) durch zumindest eine Umlenkrolle umlenkbar sind.

6. Aktuatorvorrichtung (1) nach Anspruch 5,
**dadurch gekennzeichnet, dass** die zumindest eine Umlenkrolle (7.1, 7.2, 7.3, 7.4) einen annähernd gleichen Wärmekoeffizienten wie das Umgebungsmedium hat.

7. Aktuatorvorrichtung (1) nach zumindest einem der vorhergehenden Ansprüche,
**dadurch gekennzeichnet , dass** das erste Stellelement (5.1) mittels des ersten Formgedächtnislegierungs-Elements (2) und/oder des zweiten Formgedächtnislegierung-Elements (4) translatorisch und/oder rotatorisch bewegbar ist.

8. Aktuatorvorrichtung (1) nach zumindest einem der vorhergehenden Ansprüche,
**dadurch gekennzeichnet, dass** ein zweites Stellelement (5.2) mittels des ersten Formgedächtnislegierungs-Elements (2) und/oder des zweiten Formgedächtnislegierung-Elements (4)translatorisch und/oder rotatorisch bewegbar ist.

9. Aktuatorvorrichtung (1) nach zumindest einem der vorhergehenden Ansprüche,
**dadurch gekennzeichnet, dass** die ersten Enden (2.1, 4.1) und/oder die zweiten Enden (2.2, 4.2) der beiden Formgedächtnislegierungs-Elemente (2, 4) durch jeweils einen mechanischen Anschlag (6) in ihrer Verschiebelänge begrenzt sind.

10. Aktuatorvorrichtung (1) nach zumindest einem der vorhergehenden Ansprüche,
**dadurch gekennzeichnet, dass** die Formgedächtnislegierungs-Elemente (2, 4) kraft- und/oder formschlüssig mit den Umlenkrollen (7.1, 7.2, 7.3, 7.4) verbunden sind.

11. Aktuatorvorrichtung (1) nach zumindest einem der vorhergehenden Ansprüche,
**dadurch gekennzeichnet, dass** das erste Federelement (3.1) mit dem ersten Ende (2.1) und dem zweiten Ende (2.2) des ersten Formgedächtnislegierungs-Elements (2) und bevorzugt ein zweites Federelement (3.2) mit dem ersten Ende (4.1) und dem zweiten Ende (4.2) des zweiten Formgedächtnislegierungs-Elements (4) verbunden ist.

12. Aktuatorvorrichtung (1) nach zumindest einem der vorhergehenden Ansprüche,
**dadurch gekennzeichnet, dass zumindest** ein Kühlelement zum Abkühlen der beiden Formgedächtnislegierungs-Elemente (2, 4) vorgesehen ist.

13. Aktuatorvorrichtung (1) nach zumindest einem der vorhergehenden Ansprüche,
**dadurch gekennzeichnet, dass** Kühlkammern (12.1, 12.2) zur Kühlung der Formgedächtnislegierungs-Elemente (2, 4)vorgesehen sind.

## Claims

1. Actuator device (1) comprising one first shape-memory alloy element (2) and one second shape-memory alloy element (4), and one first actuating element (5.1) and one first spring element (3.1), wherein the one first actuating element (5.1) is operationally connected to the first shape-memory alloy element (2) and to the second shape-memory alloy element (4) in such a manner that when the first shape-memory alloy element (2) is heated the first actuating element (5.1) is moved in a first direction, and when the second shape-memory alloy element (4) is heated the first actuating element (5.1) is moved in a second direction which is counter to the first direction,
**characterized in that** the first shape-memory alloy element (2) and/or the second shape-memory alloy element (4) are/is connected at least to one first spring element (3.1), wherein the first spring element (3.1) is adapted as a length compensator for the first shape-memory alloy element (2) and/or the second shape-memory alloy element (4).

2. Actuator device (1) according to at least one of the preceding claims, **characterized in that** the first spring element (3.1) is freely movable.

3. Actuator device (1) according to at least one of the preceding claims, **characterized in that** the first actuating element (5.1) after moving in a first direction remains, in particular is latched, in a terminal position.

4. Actuator device (1) according to at least one of the preceding claims, **characterized in that** the two shape-memory alloy elements (2, 4) are wires, wherein the wires are shortened upon being heated.

5. Actuator device (1) according to at least one of the preceding claims, **characterized in that** both shape-memory alloy elements (2, 4) are deflectable by at least one deflection roller.

6. Actuator device (1) according to Claim 5, **characterized in that** the at least one deflection roller (7.1, 7.2, 7.3, 7.4) has a thermal coefficient which is almost identical to that of the surrounding medium.

7. Actuator device (1) according to at least one of the preceding claims, **characterized in that** the first actuating element (5.1) is movable in a translational and/or rotational manner by means of the first shape-memory alloy element (2) and/or of the second shape-memory alloy element (4).

8. Actuator device (1) according to at least one of the preceding claims, **characterized in that** a second actuating element (5.2) is movable in a translational and/or rotational manner by means of the first shape-memory alloy element (2) and/or of the second shape-memory alloy element (4).

9. Actuator device (1) according to at least one of the preceding claims, **characterized in that** the first ends (2.1, 4.1) and/or the second ends (2.2, 4.2) of the two shape-memory alloy elements (2, 4) are each delimited in terms of the displacement length thereof by a mechanical stop (6).

10. Actuator device (1) according to at least one of the preceding claims, **characterized in that** the shape-memory alloy elements (2, 4) are connected to the deflection rollers (7.1, 7.2, 7.3, 7.4) in a force-fitting and/or form-fitting manner.

11. Actuator device (1) according to at least one of the preceding claims, **characterized in that** the first spring element (3.1) is connected to the first end (2.1) and to the second end (2.2) of the first shape-memory alloy element (2), and preferably a second spring element (3.2) is connected to the first end (4.1) and to the second end (4.2) of the second shape-memory alloy element (4).

12. Actuator device (1) according to at least one of the preceding claims, **characterized in that** at least one cooling element for cooling the two shape-memory alloy elements (2, 4) is provided.

13. Actuator device (1) according to at least one of the preceding claims, **characterized in that** cooling chambers (12.1, 12.2) for cooling the shape-memory alloy elements (2, 4) are provided.

## Revendications

1. Dispositif d'actionneur (1) comprenant un premier élément en alliage à mémoire de forme (2) et un deuxième élément en alliage à mémoire de forme (4) ainsi qu'un premier élément de réglage (5.1) et un premier élément de ressort (3.1), ledit premier élément de réglage (5.1) étant en liaison fonctionnelle avec le premier élément en alliage à mémoire de forme (2) et avec le deuxième élément en alliage à mémoire de forme (4) de telle sorte que lorsque le premier élément en alliage à mémoire de forme (2) est chauffé, le premier élément de réglage (5.1) soit déplacé dans une première direction et que lorsque le deuxième élément en alliage à mémoire de forme (4) est chauffé, le premier élément de réglage (5.1) soit déplacé dans une deuxième direction opposée à la première direction, **caractérisé en ce que** le premier élément en alliage à mémoire de forme (2) et/ou le deuxième élément en alliage à mémoire de forme (4) est/sont connectés à au moins un premier élément de ressort (3.1), le premier élément de ressort (3.1) étant prévu en tant que compensation en longueur pour le premier élément en alliage à mémoire de forme (2) et/ou le deuxième élément en alliage à mémoire de forme (4).

2. Dispositif d'actionneur (1) selon au moins l'une quelconque des revendications précédentes,
**caractérisé en ce que** le premier élément de ressort (3.1) est librement déplaçable.

3. Dispositif d'actionneur (1) selon au moins l'une quelconque des revendications précédentes,
**caractérisé en ce que** le premier élément de réglage (5.1), après le déplacement dans une première direction, reste dans une position de fin de course, en particulier s'y encliquète.

4. Dispositif d'actionneur (1) selon au moins l'une quelconque des revendications précédentes, **caractérisé en ce que** les deux éléments en alliage à mémoire de forme (2, 4) sont des fils métalliques, les fils métalliques se raccourcissant lorsqu'ils sont chauffés.

5. Dispositif d'actionneur (1) selon au moins l'une quelconque des revendications précédentes, **caractérisé en ce que** les deux éléments en alliage à mémoire de forme (2, 4) peuvent être déviés par au moins une poulie de renvoi.

6. Dispositif d'actionneur (1) selon la revendication 5, **caractérisé en ce que** l'au moins une poulie de renvoi (7.1, 7.2, 7.3, 7.4) présente un coefficient thermique approximativement identique au milieu environnant.

7. Dispositif d'actionneur (1) selon au moins l'une quelconque des revendications précédentes, **caractérisé en ce que** le premier élément de réglage (5.1) peut être déplacé au moyen du premier élément en alliage à mémoire de forme (2) et/ou du deuxième élément en alliage à mémoire de forme (4) en translation et/ou en rotation.

8. Dispositif d'actionneur (1) selon au moins l'une quelconque des revendications précédentes,
**caractérisé en ce qu'**un deuxième élément de réglage (5.2) peut être déplacé au moyen du premier élément en alliage à mémoire de forme (2) et/ou du deuxième élément en alliage à mémoire de forme (4) en translation et/ou en rotation.

9. Dispositif d'actionneur (1) selon au moins l'une quelconque des revendications précédentes,
**caractérisé en ce que** les premières extrémités (2.1, 4.1) et/ou les deuxièmes extrémités (2.2, 4.2) des deux éléments en alliage à mémoire de forme (2, 4) sont limitées à chaque fois par une butée mécanique (6) dans leur longueur de déplacement.

10. Dispositif d'actionneur (1) selon au moins l'une quelconque des revendications précédentes,
**caractérisé en ce que** les éléments en alliage à mémoire de forme (2, 4) sont connectés par engagement par force et/ou par correspondance de formes avec les poulies de renvoi (7.1, 7.2, 7.3, 7.4).

11. Dispositif d'actionneur (1) selon au moins l'une quelconque des revendications précédentes,
**caractérisé en ce que** le premier élément de ressort (3.1) est connecté à la première extrémité (2.1) et à la deuxième extrémité (2.2) du premier élément en alliage à mémoire de forme (2) et de préférence un deuxième élément de ressort (3.2) est connecté à la première extrémité (4.1) et à la deuxième extrémité (4.2) du deuxième élément en alliage à mémoire de forme (4).

12. Dispositif d'actionneur (1) selon au moins l'une quelconque des revendications précédentes,
**caractérisé en ce qu'**au moins un élément de refroidissement est prévu pour refroidir les deux éléments en alliage à mémoire de forme (2, 4).

13. Dispositif d'actionneur (1) selon au moins l'une quelconque des revendications précédentes, **caractérisé en ce que** des chambres de refroidissement (12.1, 12.2) sont prévues pour refroidir les éléments en alliage à mémoire de forme (2, 4).
